# EUROPEAN PATENT APPLICATION

(11) **EP 3 045 299 A1**
(43) Date of publication of application: **20.07.2016**
(21) Application number: 16150143.2
(22) Date of filing: 05.01.2016
(51) Int. Cl.: B29D 7/01, B29C 55/18

(54) **EXTENSIBLE FILM, PARTICULARLY FOR PALLETIZING, AND METHOD OF PROVIDING SUCH FILM**

(30) Priority: 13.01.2015 IT PD20150003
(71) Applicant: Galloplastik S.r.l., 30015 Chioggia (VE) (IT)
(72) Inventor: TIOZZO GOBETTO, Eugenio, 30015 CHIOGGIA VE (IT)
(74) Representative: Modiano, Micaela Nadia

(57) **Abstract**

An extensible film, particularly for palletizing, and a method of providing such film.

The extensible film (10, 110) comprises a longitudinally extended film (11, 111) made of extensible plastic material and longitudinally extended reinforcement elements (12, 112) which comprise longitudinal portions (13, 113) of the film (11, 111) which are mutually superimposed in a random arrangement.

The method consists in:
- providing a film (11, 111),
- corrugating the film (11, 111) with U-shaped cross-sections (16, 116) which are alternated with inverted U-shaped cross-sections (17, 117),
- superimposing in a random manner longitudinal portions (13, 113) of the corrugated film (18, 118) on the plane of said film (11, 111).

## Description

The present invention relates to an extensible film, particularly for palletizing, and a method of providing such film.

Nowadays extensible films are known and are very widespread; they are usually made of polyethylene and are used for wrapping individual or clustered products loaded on pallets.

The film, in addition to protecting the products, when used to wrap the goods on the pallets, also has the function of compacting them, preventing the goods, especially when stacked, from moving and falling off the pallet.

Many types of products, when they are palletized, can exhibit problems of stability owing to their shape and their weight, and for this reason often abundant wrapping is employed, which is obtained by winding the products with many layers of film, or a film of greater thickness is used. Since films are generally sold by the meter or by weight, these solutions do not reconcile well with the need to keep down costs for the user.

Furthermore, the extensible films known today suffer the drawback of easily being prone to tearing if they are wound around pointed items, such as for example bricks and mechanical parts, and these tears tend to propagate to part or even all of the width of the film, compromising the safety thereof and therefore also compromising the stability of the palletized goods.

Among the extensible films known today are perforated and reinforced films, which are used for example for wrapping boxes, stacked on pallets, containing products that require a change of air in order to best maintain their qualities, such as for example fruit and vegetable products or products that have undergone pasteurization and which therefore are subject to the release of water vapor which must not be allowed to accumulate and form condensation.

The perforated films known today are usually constituted by a film made of longitudinally extended plastic material, which is provided with longitudinal reinforcement elements, which are parallel and also extensible, and holes or cuts for ventilation between two adjacent reinforcement elements.

Such films are often subjected to a longitudinal stretching operation at the same time as they are used, i.e. at the time of unwinding the reel in order to wind it around a pallet or another group of products. Such operation increases its tensile strength in the same direction as the stretching.

In other cases, they are subjected to a longitudinal stretching operation in a step of production, also known as pre-stretching, before being finally wound on a reel.

The use of reinforcement elements is made necessary by the fact that the perforation of the film results in the generation, at the holes, of imperfections that represent stress raisers for tearing during the stretching of the film, as well as such reinforcement elements are for use on pointed items, in order to prevent the propagation of the cuts that such objects can cause.

Currently there are extensible films on the market which have reinforcement elements, in the form of strips, applied onto the surface of the film and made to adhere simply by contact, or gluing, or heat-sealing.

Also known are extensible films where the reinforcements are extruded together with the rest of the film, by thickening some portions with the same material or with similar material.

According to another type, the reinforcement elements are there only at the outer edges, where they are obtained by folding or turning over the edges, from the outside inward, in order to facilitate a correct unwinding of the film but, however, protecting only the ends from tearing.

These films suffer a number of non-negligible drawbacks, such as the fact that the reinforcement strips applied on the surface can easily detach from the rest of the film, in addition to exhibiting different or dissimilar mechanical behavior therefrom, for example with different breaking points.

Furthermore, in order to be thus provided a film requires complex processing, which requires the reinforcement strips to be cut and applied.

For reinforcement strips that are glued or heat-sealed onto the base film, being characterized by thicknesses of less than 20 microns, the use of adhesive and of electric resistors can cause damage to the base film, in addition to making the production process laborious and wasteful.

Films with reinforcements that are extruded together with the rest of the film are also not devoid of drawbacks. Extruded reinforcement elements, being part of the base film, do not provide an effective obstacle to the propagation of a possible tearing of the film, because the tearing is easily transferred to the reinforced part. Furthermore, providing these reinforcements is complex and it is also relatively expensive.

The aim of the present invention is to provide an extensible film, particularly for palletizing, thanks to which it is possible to ensure the stability of products loaded on pallets, even the heaviest and most unstable products, using a smaller amount thereof with respect to conventional films.

Within this aim, an object of the invention is to provide an extensible film that is capable of preventing the propagation of any tearing.

Another object of the invention is to provide an extensible film that, despite its perforation in advance, resists tearing during application on pallets.

Another object of the invention is to provide a method with which to provide an extensible film, resistant to tearing, in a less laborious manner and in less time than the other techniques known today, as a consequence with lower production costs, and furthermore using conventional systems and technologies.

This aim and these and other objects which will become better apparent hereinafter are achieved by an extensible film, particularly for palletizing, of the type comprising a longitudinally extended film made of extensible plastic material and characterized in that it comprises longitudinally extended reinforcement elements which comprise longitudinal portions of said film which are mutually superimposed in a random arrangement.

The invention also relates to a method of providing an extensible film, particularly for palletizing, which consists in:
- providing a film,
- corrugating said film with U-shaped cross-sections which are alternated with inverted U-shaped cross-sections,
- superimposing in a random manner longitudinal portions of said corrugated film on the plane of said film.

Further characteristics and advantages of the invention will become better apparent from the description of two preferred, but not exclusive, embodiments of the extensible film according to the invention, and of preferred embodiments of the method according to the invention, which are illustrated for the purposes of non-limiting example in the accompanying drawings wherein:
- Figure 1 shows a step of a method of providing an extensible film according to the invention in the first embodiment thereof;
- Figure 2 is a cross-sectional view of a corrugated film, taken along the longitudinal direction of extension;
- Figure 3 is an enlarged cross-sectional view of the step of random overlap of the longitudinal portions of the corrugated film;
- Figure 4 is an enlarged cross-sectional view of the extensible film according to the invention, in the first embodiment thereof;
- Figure 5 is a front elevation view of a portion of extensible film according to the invention;
- Figure 6 is a front elevation view of a portion of perforated extensible film;
- Figure 7 is a front elevation view of a portion of extensible film with transverse cuts;
- Figure 8 shows a step of the method of providing the extensible film according to the invention in a second embodiment thereof;
- Figure 9 is a cross-sectional view of the corrugated film during the provision of the extensible film in the second embodiment thereof, taken along the longitudinal direction of extension of the film;
- Figure 10 is an enlarged cross-sectional view of the step of random overlap of the longitudinal portions of the corrugated film;
- Figure 11 is an enlarged cross-sectional view of the extensible film according to the invention, in the second embodiment thereof.

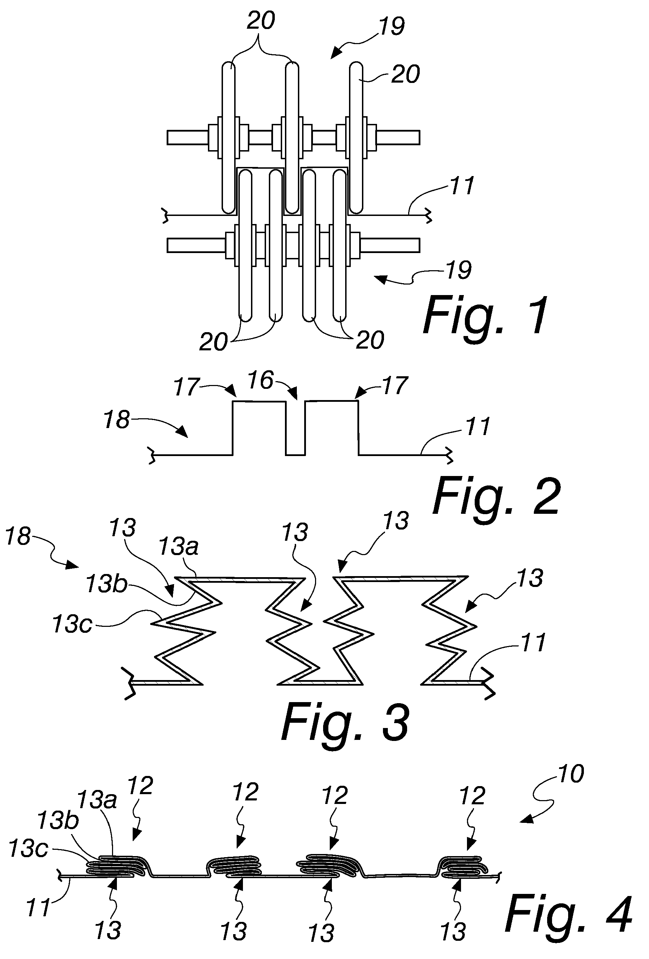

With reference to Figures 1 to 7, the extensible film according to the invention is generally designated with the reference numeral 10 and is preferably, but not exclusively, used for wrapping a group of products.

The extensible film 10 is constituted by a film 11 with a predominantly longitudinal extension.

The film 11 is made of extensible plastic material, preferably of polyethylene, since it is completely recyclable.

The extensible film 10 advantageously comprises longitudinally extended reinforcement elements 12, which comprise longitudinal portions 13 of the film mutually superimposed in a random arrangement.

The overlapping longitudinal portions 13 are shown in Figure 4. In such figure it can clearly be seen how, by way of their grouping, they create a multiplication of the thickness.

Figure 3 shows the film 11 in a step of providing the extensible film 10 which precedes the overlapping of the longitudinal portions 13. The set of longitudinal portions is designated with 13, while they are designated individually with 13a, 13b, 13c, etc. (for the sake of simplicity only some of these are designated, and only at one of the areas of the film 11 at which it is intended to create the reinforcement elements 12).

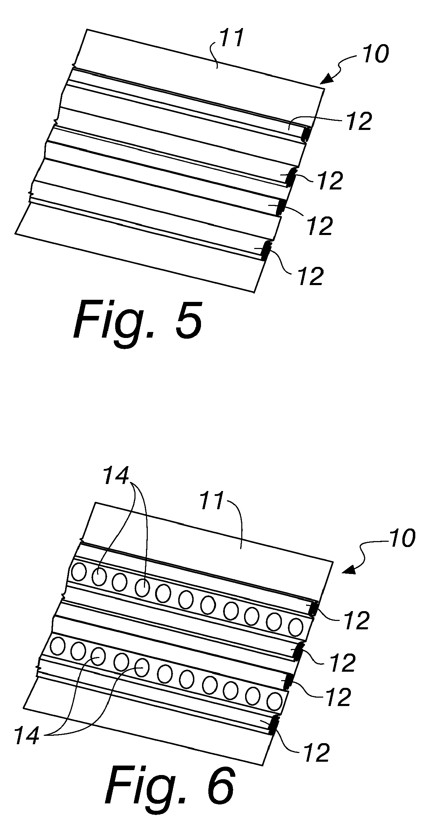

The extensible film 10 is shown in a front elevation view in Figure 5, in which the reinforcement elements 12 can clearly be seen.

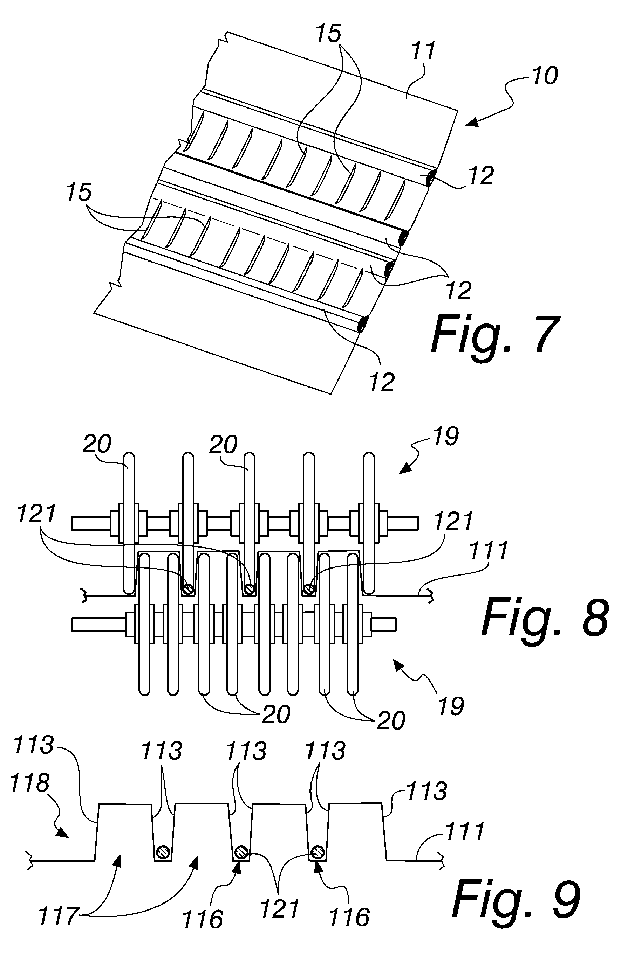

Figure 6 and Figure 7 show some variations of the extensible film 10.

According to Figure 6, the extensible film 10 has ventilation holes 14, which in the example shown are substantially circular and are obtained for example by way of punching or using heat, in a way that is known per se.

In the second variation, shown in Figure 7, the extensible film 10 has cuts 15, between the reinforcement elements 12, which are adapted to provide ventilation openings during the stretching of the extensible film 10. The cuts 15 can be made in a direction which is oblique or transverse with respect to the longitudinal direction of extension of the film 11, like those shown, or according to the same direction.

According to another possible variation, not shown for the sake of simplicity, the extensible film can have cuts the ends of which fall partially on the reinforcement elements, i.e. for a small part and without passing through them completely. Such cuts, as in the previous case, are adapted to provide ventilation openings during the stretching of the extensible film.

As can be seen from Figures 5 to 7, the reinforcement elements 12, in addition to having substantially longitudinal extension, and since they are created by the overlapping of longitudinal portions 13, are also arranged along the longitudinal direction of the film 11.

The method of providing the extensible film 10 in the first embodiment thereof consists of:
- providing the film 11,
- corrugating the film 11 with U-shaped cross-sections 16 which are alternated with inverted U-shaped cross-sections 17,
- superimposing in a random manner longitudinal portions 13 of a corrugated film 18 on the plane of the film 11.

The film 11 is provided by extrusion and cooling of the plastic material and, as illustrated in Figure 1, subsequently it is corrugated by making it pass through two series of conveyor rollers 19 in which the wheels 20 of one series are arranged between wheels 20 of the other series.

The corrugated film 18, transformed by the passage through the conveyor rollers 19, has U-shaped cross-sections 16 alternated with inverted U-shaped cross-sections 17, as shown in Figure 2.

Figure 3 shows a moment of the random overlap of the longitudinal portions, which in detail are designated with 13a, 13b, 13c while figure 4 shows the result obtained, i.e. the reinforcement elements 12.

In particular, the overlapping of the longitudinal portions 13 occurs by conveying the portions of film 11 in a space which is limited at a point.

The extruded film 11 is conventional and, owing to the intrinsic characteristics of the product, one of its faces is substantially adhesive. For this reason, in the overlapping step the longitudinal portions 13 adhere to each other.

Optionally, for slippery materials or when necessary, the reinforcement elements 12 produced with the overlapping can simply be heated so that they are permanently heat-sealed and maintain the fold even against traction forces transverse to their direction.

Alternatively, the same result can be obtained by carrying out the overlapping when the material of the film 11 is still hot from its extrusion, thus achieving the heat-sealing of elements of the same material, which are already at the ideal temperature for heat-sealing.

The method according to the invention can also comprise a step of perforation of the film 11 so as to provide the ventilation holes 14, in order to obtain the extensible film in the variation shown in Figure 6. This step can be carried out, preferably, after the step of overlapping the longitudinal portions 13 of corrugated film 18.

Alternatively, in order to provide the variation of extensible film 10 shown in Figure 7, the method can comprise, preferably after the step of overlapping the longitudinal portions 13, a cutting step in order to obtain the cuts 15 adapted to provide ventilation openings in a subsequent step of stretching the extensible film 10. In the case shown, the cuts 15 are transverse with respect to the direction of extension of the film 11, but, as noted earlier, they can also be made in an oblique direction with respect to the direction of extension of the film 11 or in the same direction as the film 11.

If the cuts are made on the film 11 with ends that fall partially on the reinforcement elements 12, then the method must comprise a cutting step, to be carried out after the step of forming the corrugated film 18 and before the random overlap of its longitudinal portions 13, so as to provide cuts the ends of which fall partially on the longitudinal portions 13.

With reference to Figures 8 to 11, the extensible film according to the invention is generally designated with the reference numeral 110.

As in the previous embodiment, it comprises a longitudinally extended film 111 made of extensible plastic material, in this case again preferably polyethylene.

The extensible film 110 advantageously comprises longitudinally extended reinforcement elements 112, which comprise longitudinal portions 113 of the film mutually superimposed in a random arrangement.

In this embodiment, the extensible film 110 comprises filaments 121 between the overlapped longitudinal portions 113 of the film 111.

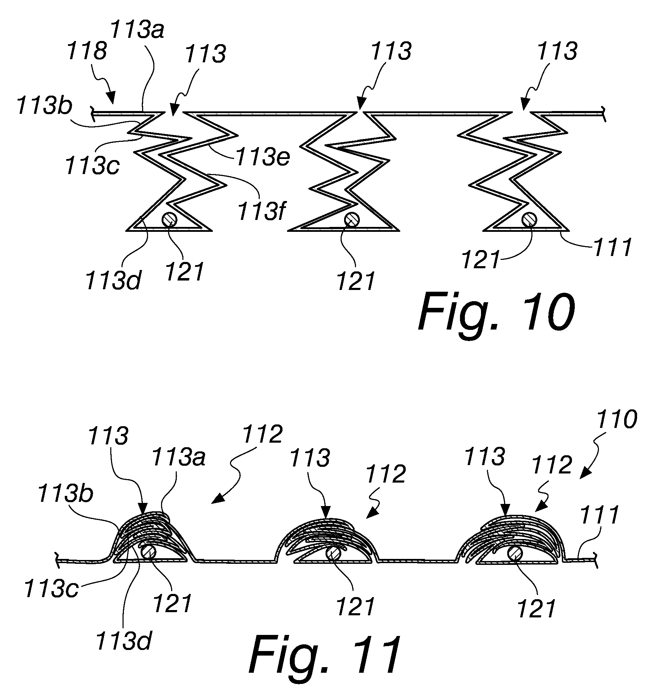

The overlapping longitudinal portions 113 are shown in Figure 11. In that figure, it can clearly be seen that they are overlapping each other and also the filaments 121, with which they create the reinforcement elements 112.

Figure 10 shows the film 111 in a step of providing the extensible film 110 which precedes the overlapping of the longitudinal portions 113. The set of longitudinal portions is designated with 113, while they are designated individually with 113a, 113b, 113c, 113d, 113e, 113f, etc. (for the sake of simplicity only some of these are designated, and only at one of the areas of the film 111 at which it is intended to create the reinforcement elements 112).

The filaments 121 are also made of extensible plastic material, again preferably, but not exclusively, of polyethylene or in any case of the same material as the film 111.

The method of providing the extensible film 110 in the second embodiment thereof consists of:
- providing the film 111,
- corrugating the film 111 with U-shaped cross-sections 116 which are alternated with inverted U-shaped cross-sections 117,
- superimposing in a random manner longitudinal portions 113 of the corrugated film 118 on the plane of the film 111.

The film 111 is provided by extrusion and cooling of the plastic material and, as illustrated in Figure 8, subsequently it is corrugated by making it pass through two series of conveyor rollers 19 in which the wheels 20 of one series are arranged between wheels 20 of the other series.

The corrugated film 118, transformed by the passage through the conveyor rollers 19, has U-shaped cross-sections 116 alternated with inverted U-shaped cross-sections 117, as shown in Figure 9.

Each one of them is associated with the corrugated film 118, as the latter passes through the conveyor rollers 19, at the bottom of one of the U-shaped cross-sections 116 or of the inverted U-shaped cross-sections 117.

The random overlap of the longitudinal portions 113 is carried out over the respective filament 121 interposed between two series of the same longitudinal portions 113.

Also in this embodiment the extruded film 111, which is conventional, has one of its faces substantially adhesive, owing to the intrinsic characteristics of the product. For this reason, in the overlapping step the longitudinal portions 113 adhere to each other and optionally also to the filament 121, encapsulating it, thus retaining it.

Optionally, for slippery materials or when necessary, the reinforcement elements 112 produced with the overlapping can be heated so that they are permanently heat-sealed and maintain the overlapping even against traction forces transverse to their direction of extension, thus retaining the filaments 121.

Alternatively, the same result can be obtained by carrying out the overlapping when the material of the film 111 is still hot from its extrusion.

Figure 9 shows a moment of the random overlap of the longitudinal portions, which in detail are designated with 113a, 113b, 113c, 113d, 113e, 113f, on the filament 121, while figure 10 shows the result obtained, i.e. the reinforcement elements 112.

In particular, the overlapping of the longitudinal portions 113 occurs by conveying the portions of film 111 in a limited space at the filament 121.

The three variations of extensible film shown in Figures 5, 6 and 7 can also be obtained with the second embodiment of the extensible film 110 and in this case also the extensible film can have cuts the ends of which fall on the reinforcement elements without passing through them completely, therefore to a small extent and on the overlapped longitudinal portions 113 and not on the filaments 121. The extensible film 110 can undergo the same further steps of processing in order to provide ventilation holes and cuts adapted to provide ventilation openings during the stretching of the extensible film 110.

Furthermore, also in this embodiment the reinforcement elements 112 are longitudinally extended, owing to the overlapping of longitudinal portions 113, and are also arranged along the direction of extension of the film 111.

The reinforcement elements 12, 112 are made using the same material that the extensible film is made of in its embodiments 10 and 110, by overlapping it in a very limited space at a plurality of points on the width of the film 11, 111. This makes the extensible film uniformly strong.

Furthermore the extensible film 10, 110 can be strengthened, in a known manner, at the outer edges of the film 11, 111.

The reinforcement elements 12 and 112 are capable of preventing any tearing from propagating and of reducing the risk of tearing during the opening of the cuts, and also the tearing of the open holes, during the stretching of the film, therefore also during application on pallets.

It should be noted that, if the reinforcement elements 12, 112 are heated or the longitudinal portions 13, 113 are overlapped when the film 11, 111 is still hot from its extrusion, then the adhesion of the longitudinal portions 13, 113 is substantially final and this ensures that they maintain the overlapping not only following tractive forces applied in their same direction of extension, but also in the transverse direction.

Furthermore, the way in which the adhesion is obtained of the longitudinal portions of the film, when no heat-sealing is used, does not damage the film and does not require the use of adhesive.

It should also be noted that the reinforcement elements 12 are obtained using the film proper, thus making the extensible film mono-component.

In the second embodiment the overlapped longitudinal portions 113 encapsulate the filaments 121, preventing the egress thereof. In this manner the reinforcement elements 112 are substantially in a single body. At the same time the filaments 121 are capable of increasing the resistance to tearing of the film 111, because in such eventuality, when the tearing reaches the filaments 121, these constitute a point of discontinuity of the material, which prevents the tearing from propagating.

Furthermore, when the cuts are made with ends that fall partially on the reinforcement elements, they exhibit a low risk of tearing, because they cannot propagate at their ends, either when the extensible film is wound about the pallet or when it is being stretched.

The extensible film, thanks to its greater strength with respect to conventional extensible films, is capable of ensuring the stability of the products loaded onto pallets and around which it is wound, even the heaviest and most unstable products, using a smaller quantity thereof with respect to conventional films.

Again, it should be noted that the extensible film can be produced in a single procedure, without successive processing steps, as is required in the known art, for example for the application of reinforcement strips.

In practice it has been found that the invention fully achieves the intended aim and objects, by providing an extensible film that is capable of overcoming the drawbacks of conventional extensible films, it being capable of resisting tearing and also tractive forces applied both in the direction of extension of the reinforcement elements and in the transverse direction, at the same time ensuring therefore the required stability for products loaded on pallets, using a smaller quantity thereof with respect to conventional extensible films.

The extensible film further can be produced using conventional systems and technologies and in a less laborious manner and therefore in less time and at lower cost than the other techniques known today.

The invention, thus conceived, is susceptible of numerous modifications and variations, all of which are within the scope of the appended claims. Moreover, all the details may be substituted by other, technically equivalent elements.

In practice the materials employed, provided they are compatible with the specific use, and the contingent dimensions and shapes, may be any according to requirements and to the state of the art.

The disclosures in Italian Patent Application No. PD2015A000003 (102015902321101) from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An extensible film (10, 110), particularly for palletizing, of the type comprising a longitudinally extended film (11, 111) made of extensible plastic material and **characterized in that** it comprises longitudinally extended reinforcement elements (12, 112) which comprise longitudinal portions (13, 113) of said film (11, 111) which are mutually superimposed in a random arrangement.

2. The extensible film according to claim 1, **characterized in that** said reinforcement elements (112) comprise filaments (121) made of extensible plastic material between said longitudinal portions (113) of said film (111).

3. The extensible film according to claim 1, **characterized in that** it has ventilation holes (14).

4. The extensible film according to claim 1, **characterized in that** it is provided with cuts (15) adapted to provide ventilation openings during the stretching of said extensible film (10).

5. The extensible film according to claim 1, **characterized in that** it is provided with cuts the ends of which fall partially onto said reinforcement elements, said cuts being adapted to provide ventilation openings during the stretching of said extensible film.

6. The extensible film according to claim 1, **characterized in that** said reinforcement elements (12, 112) are longitudinally extended and are arranged along the direction of extension of said film (11, 111).

7. A method for providing an extensible film according to one or more of the preceding claims, which consists in:
- providing a film (11, 111),
- corrugating said film (11, 111) with U-shaped cross-sections (16, 116) which are alternated with inverted U-shaped cross-sections (17, 117),
- superimposing in a random manner longitudinal portions (13, 113) of said corrugated film (18, 118) on the plane of said film (11, 111).

8. The method according to claim 7, **characterized in that** it comprises the association of filaments (121) with said corrugated film (118), each one at the bottom of one of said U-shaped cross-sections (116) or of said inverted U-shaped cross-sections (117), the random overlap of said longitudinal portions (113) being provided on the respective said filament (121) that is interposed between two series thereof.

9. The method according to claim 7, **characterized in that** it comprises a step of perforating said film (11) so as to provide ventilation holes (14).

10. The method according to claim 7, **characterized in that** it comprises a step of cutting said film (11), so as to provide cuts (15) adapted to provide ventilation openings in a subsequent step of stretching of said extensible film (10).

11. The method according to claim 7, **characterized in that** it comprises a step of cutting said corrugated film (18), to be performed before the overlapping of said longitudinal portions (13), so as to provide cuts the ends of which fall partially onto said longitudinal portions (13).
